# EUROPEAN PATENT APPLICATION

(11) **EP 1 884 401 A1**
(43) Date of publication of application: **06.02.2008**
(21) Application number: 07106198.0
(22) Date of filing: 13.04.2007
(51) Int. Cl.: B60N 2/30, B60N 2/22, B60N 2/12, B60N 2/02

(54) **Seat assembly provided with an articulated-quadrilaterial supporting device for a motor vehicle**

(30) Priority: 27.07.2006 EP 06425529
(71) Applicant: C.R.F. SOCIETA' CONSORTILE PER AZIONI, 10043 Orbassano (Torino) (IT)
(72) Inventor: Demontis, Salvatore c/o C.R.F. Società Consortile per Azioni, 10043 Orbassano (IT); Masoero, Giorgio c/o C.R.F. Società Consortile per Azioni, 10043 Orbassano (IT); Storgato, Angelo c/o C.R.F. Società Consortile per Azioni, 10043 Orbassono (IT)
(74) Representative: Jorio, Paolo

(57) **Abstract**

A seat assembly (1) for a motor vehicle is provided with a sitting portion (7) and a backrest (8), which is able to rotate about a horizontal axis (11), orthogonal to a longitudinal direction (12) of advance of the motor vehicle, between a raised position and a position where it is folded down against the sitting portion (7); the seat assembly (1) is provided with an articulated quadrilateral (20) made up of at least one front connecting rod (21) and at least one rear connecting rod (22) hinged to the sitting portion (7) about respective first axes (25, 26) and to a supporting base (17) about respective second axes (29, 30); the sitting portion (7) is movable backwards, considering the longitudinal direction (12) of advance, from a first position, in which the sitting portion (7) defines a sitting place for a passenger, to reach a rest position, in which the first axis (25) of one of the connecting rods (21, 22) is lower than the corresponding second axis (29).

## Description

The present invention relates to a seat assembly provided with an articulated-quadrilateral supporting device for a motor vehicle.

It is known to connect the sitting portions of the front seats to the floor or bottom panel of the motor vehicle by means of an articulated-quadrilateral supporting device.

DE10341687 discloses a frame of a seat which is designed as a movable unit formed by two lateral levers. The lateral levers are swivel mounted to a transversally positioned bar at the rear of the seat area. Two vertical bars are swivel mounted to a base. The position of the levers in relation to the base is determined by an adjusting unit operated with a handle. A central spring is located between the movable unit and the seat area acting vertically on the unit.

When the seats of the known type described above are in their normal condition when the vehicle is travelling and are not occupied by passengers, there exists the need to be able to fold the backrest of the seat forwards so that it lies down flat against the sitting portion. In this way, the rear surface of the backrest can provide part of an additional loading surface or else a substantially horizontal supporting surface to enable the driver or other passengers to lay down thereon in a stable position a wide range of objects, such as, for example, plastic cups, portable computers, etc.

In particular, there exist the needs to reduce as much as possible the encumbrance and to have a safe solution when the backrest is fold down forwards so that it lies on the sitting portion.

Preferably, the additional need exists to be able to displace the seat forward with a relatively wide range of travel in order to improve the convenience of access to the rear seats through the front doors of the vehicle.

The aim of the present invention is to provide a seat assembly equipped with an articulated-quadrilateral supporting device for a motor vehicle that will enable the requirements set forth above to be met in a simple and economically advantageous way.

According to the present invention a seat assembly for a motor vehicle is provided, as defined in claim 1.

For a better understanding of the present invention, a preferred embodiment is now described purely by way of nonlimiting example, with reference to the attached plate of drawings, wherein:
- Figure 1 is a side view of a preferred embodiment of the seat assembly provided with an articulated-quadrilateral supporting device for a motor vehicle, according to the present invention; and
- Figures 2 and 3 are similar to Figure 1 and show the seat assembly of Figure 1 in different functional positions.

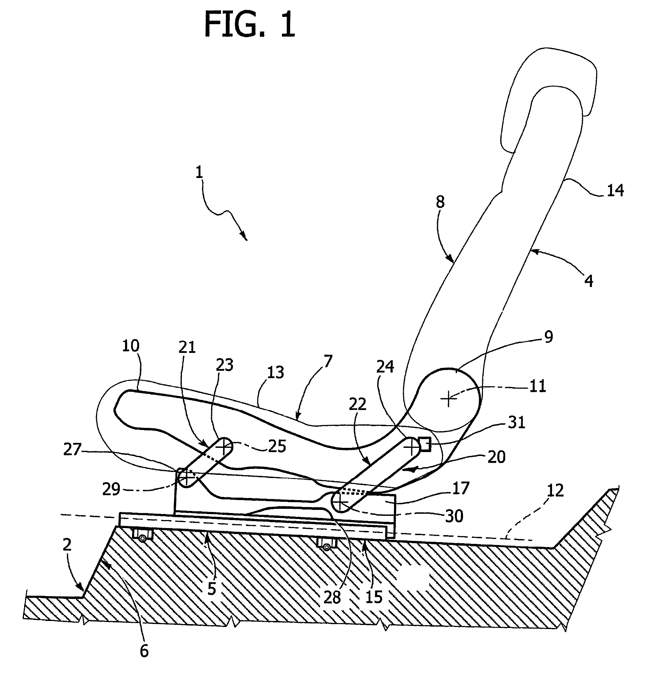

In Figure 1, the reference number 1 designates a seat assembly, which is provided in the passenger compartment 2 of a motor vehicle. The seat assembly 1 comprises a seat 4 and a supporting and movement assembly 5, which connects the seat 4 to a floor panel 6, which defines the bottom of the passenger compartment 2.

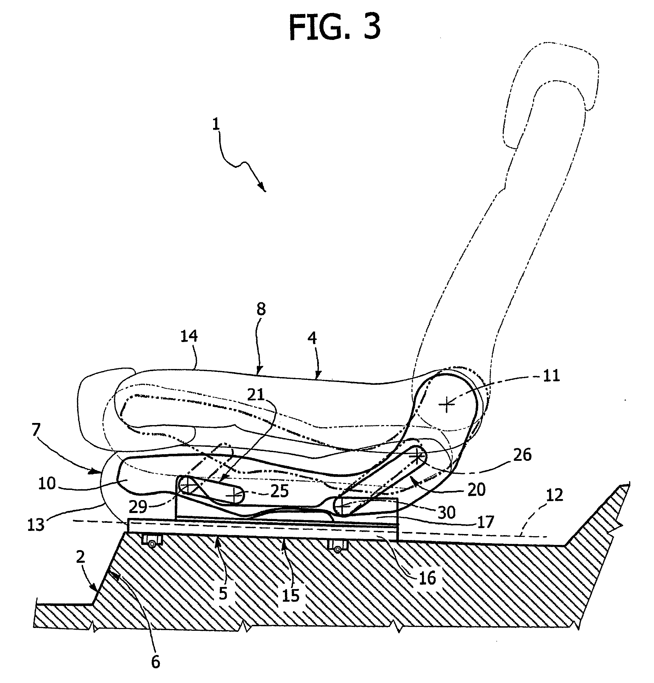

The seat 4 comprises a sitting portion 7 and a backrest 8, which is attached to two brackets defining the rear terminal portion 9 of a frame 10 of the sitting portion 7 and is able to turn about a horizontal axis 11 (Figure 1) orthogonal to a longitudinal direction 12 of advance of the motor vehicle, between a substantially vertical raised position (Figure 1) and a position where it is folded down so that it remains substantially horizontal (Figure 3).

Incidentally, it is pointed out that hereinafter the terms "front", "rear", "forwards", "backwards", "top", "bottom", etc. are used with reference to the direction of advance of the motor vehicle.

In the position indicated above where the backrest 8 is folded down, said backrest 8 is set resting against a padding 13, which covers at the top the frame 10, and has a rear surface 14 that extends in a substantially horizontal direction to define part of an additional loading surface and/or a resting surface. In this way, the surface 14 enables the driver or the passengers of the motor vehicle to lay, in a stable position, a wide range of objects, such as for example plastic cups, portable computers, light luggage, etc.

The assembly 5, instead, comprises a guide-and-slide device 15, which comprises, in turn, two longitudinal guide rails 16, fixed to the floor panel 6 in positions set, in a transverse direction, at a distance between one another, and a slide 17 coupled to the rails 16 in such a way as to be able to slide longitudinally. The slide 17 can be clamped by a releasable retention device, of a type in itself known and not shown, in a position of use that is fixed and/or can be adjusted with respect to the rails 16 and that is such as to satisfy the ergonomic requirements of the user.

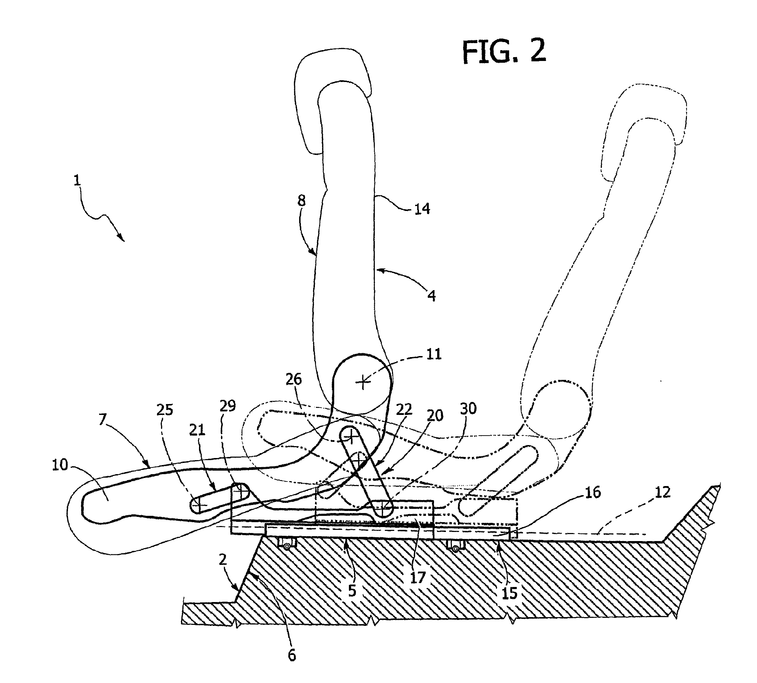

Once said retention device is released, the slide 17 can be slid along the rails 16 by pushing the seat 4 manually or else via a motor-driven device. In a preferred embodiment, when the rear-seat passengers need to get into or out of the vehicle through the front doors (not shown), the slide 17 is brought into an advanced end-of-travel position (Figure 2).

With reference to the attached figures, the assembly 5 further comprises an articulated quadrilateral 20 made up of at least one front connecting rod 21 and at least one rear connecting rod 22.

The top ends of the connecting rods 21, 22 are designated by the reference numbers 23 and 24, respectively, and are hinged to the frame 10 about respective axes 25, 26 parallel to the axis 11, whilst the bottom ends of the connecting rods 21, 22 are designated by the reference numbers 27 and 28, respectively, and are hinged to the slide 17 about respective axes 29, 30, which are also parallel to the axis 11.
The articulated quadrilateral 20 renders the seat 4 movable with respect the slide 17 from a first position, in which the seat 4 is in a normal condition when the vehicle is travelling and defines a seat for a passenger in optimal ergonomic conditions with respect to the other components of the passenger compartment 2, to a second position, in which the sitting portion 7 is longitudinally advanced with respect the first position to enable the rear-seat passengers to get in and out through the front doors, preferably in combination with advance of the slide 17.

In addition, thanks to the articulated quadrilateral 20, the seat 4 is movable with respect to the slide 17 also in an opposite direction, i.e., backwards, from the first position to a rest position, in which the sitting portion 7 is lower than in the first position. Preferably, the sitting portion 7 has a bottom cavity (not shown), which, in the aforesaid rest position, houses the connecting rods 21, 22 completely and the slide 17 partially.

The length of the connecting rod 22 is preferably greater than that of the connecting rod 21 (by the term "length" is understood the distance between the axes 25, 29 and between the axes 26, 30) to obtain also a rotation of the sitting portion 7, in addition to a translation, during the displacement away from and towards the first position. In particular, in the second position, the seat 4 is partially tilted forwards with respect the first position to optimize the space necessary for the rear-seat passengers to get in and out of the vehicle.

The seat 4 remains released in the first position with respect to the slide 17 under the action of a releasable retention device 31 (shown as a whole in Figure 1), which preferably is carried by the frame 10 and acts on the connecting rod 22. Release of the device 31 is obtained by a lever transmission (not shown), operated by a manual control (not shown) set in sight on a side of the backrest 8. Alternatively, the device 31 is released by a motor-driven device (not shown), activated by a manual control provided in the passenger compartment 2.

Once the device 31 has been released, the movements away from and towards the first position are caused by manual thrusts and/or by the weight of the seat 4, and are possibly dampened in a way not described in detail, for example via springs (not shown), which can possibly facilitate also return of the seat 4 into/from the first position.

Alternatively, the movements of the seat 4 away from and towards the first position are motor-driven.

When the seat 4 reaches the rest position, it is set resting against the slide 17 and/or against the rails 16 and/or the floor panel 6. The connecting rod 21 is rotated backwards about the axis 29 (in the clockwise direction, as viewed in Figure 3) and has exceeded a rear dead centre, defined by the alignment of the axis 25 with the axis 29 in the direction 12 so that any possible inertial action in the direction 12, due to sharp accelerations, braking or else impact of the motor vehicle, do not cause the sitting portion 7 to tilt over forwards towards the first position, but tend to cause rotation of the connecting rod 21 downwards and, hence, to push the sitting portion 7 further against the floor panel 6.

In a normal condition when the vehicle is travelling and when the seat is not occupied by a passenger, the backrest 8 can be tilted forwards in a position where it is folded down, to have the surface 14 available as substantially horizontal resting surface or loading surface. Using the rest position of the seat 4 for folding down the backrest 8 (Figure 3), it is possible to reduce the encumbrance in the vertical direction of the seat assembly 1 with respect to the floor panel 6 in a situation of so-called optimal "packing", minimizing the height of the loading threshold defined by the surface 14.

According to a preferred embodiment, the rotation of the backrest 8 in a position where it is folded down occurs simultaneously with the displacement backwards of the seat 4 from the first position to the rest position, in response to a single control device and/or to a single common actuation device (not shown) or else in response to various actuation devices synchronized with one another (not shown either).

The operation and the advantages of the seat assembly 1 are evident from the characteristics described above. In particular, according to the position reached by connecting rod 21 when seat 4 is in the rest position, axis 25 of connecting rod 21 is lower than the corresponding second axis 29. In this way, in case of a sharp deceleration or in case of a front impact of the vehicle, forces of inertia acting horizontally on sitting portion 7 along direction 12 tend to push axis 25 forwards and therefore tend to rotate connecting rod 21 downwards about axis 29. The downward rotation of connecting rod 21 tends to press sitting portion 7 downwards and therefore keeps stationary the seat, i.e. avoiding an upward and forward movement of the seat.

The articulated quadrilateral 20 enables both advance of the seat 4 into an advanced position for enabling the rear-seat passengers to get into or out of the vehicle through the front doors and "packing" of the seat assembly 1 when the backrest 8 is folded down on the sitting portion 7.

Furthermore, the combination of the slide 17 with the quadrilateral 20 enables an ample advance of the seat 4 with respect the first position to enable the rear-seat passengers to get into or get out of the vehicle conveniently through the front doors.

Finally, it is clear that modifications and variations can be made to the assembly 1 described and shown herein, without thereby departing from the sphere of protection of the present invention, as defined in the annexed claims.

In particular, the quadrilateral 20 could be connected to a fixed supporting base or directly to the floor panel 6, without the device 15. The connecting rods 21, 22 could be provided in a greater number, and/or could have lengths different from the ones shown, and/or have an inclination with respect to one another different from the one shown.

In addition, the device 31 could be carried by the slide 17 and/or act on the connecting rod 21.

Furthermore, the assembly 1 could be provided for a second row of seats, when the motor vehicle also has a third row of rear seats.

Finally, the device 31 could comprise a first portion, which prevents rotation of the seat 4 towards the second position, and a second portion, which prevents rotation of the seat 4 towards the rest position and can be released in an independent way from the first portion. In this case, release of the backrest 8 from its substantially vertical raised position and release of the second portion of the device 31 could occur simultaneously as a result of a single control device and/or a single actuation device in common (not shown).

## Claims

1. A seat assembly (1) for a motor vehicle comprising:
- a sitting portion (7);
- a backrest (8) that can rotate about a horizontal axis (11), orthogonal to a longitudinal direction (12) of advance of said motor vehicle, between a raised position and a position where it is folded down; said backrest (8) having a rear surface (14) that, in said position where it is folded down, is substantially horizontal; and
- a supporting and movement assembly (5) coupled to said sitting portion (7) for connecting said sitting portion (7) to a floor panel (6) of said motor vehicle; the supporting and movement assembly (5) comprising an articulated quadrilateral (20), which comprises at least one front connecting rod (21) and at least one rear connecting rod (22); said connecting rods (21, 22) being hinged to
a) said sitting portion (7) about respective first axes (25, 26) parallel to said horizontal axis (11), and
b) to a supporting base (17) about respective second axes (29, 30) which are also parallel to said horizontal axis (11);
**characterised in that** said sitting portion (7) is movable backwards, considering said longitudinal direction (12) of advance, from a first position, in which the sitting portion (7) defines a sitting place for a passenger, to reach a rest position, in which the first axis (25) of one of said connecting rods (21, 22) is lower than the corresponding second axis (29).

2. The seat assembly according to claim 1, **characterized in that** said supporting and movement assembly (5) further comprises a slide-and-guide device (15) comprising a slide (17), that is able to slide longitudinally and defines said supporting base.

3. The seat assembly according to claim 1 or 2, **characterized in that** the sitting portion (7), in said rest position, is lower than in said first position.

4. The seat assembly according to anyone of the preceding claims, **characterised in that** said sitting portion (7) is movable forwards from said first position to a second position, which is longitudinally advanced with respect to said first position to allow access to rear seats.

5. The seat assembly according to anyone of the preceding claims, **characterized in that** the length of said connecting rods (21, 22) differ from one another.
